# EUROPÄISCHE PATENTSCHRIFT

(11) **EP 0 519 223 B1**
(45) Veröffentlichungstag und Bekanntmachung des Hinweises auf die Patenterteilung: **09.11.1994**
(21) Anmeldenummer: 92108384.6
(22) Anmeldetag: 19.05.1992
(51) Int. Cl.: F16L 13/08

(54) **Gasdichte Verbindung zwischen Rohren kleinen Durchmessers sowie Verfahren und Anlage zu deren Herstellung**
Gastight coupling between pipes of small diameter and method and apparatus for manufacture
Raccord étanche aux gaz entre tuyaux de faibles diamètres, procédé et appareil de fabrication

(30) Priorität: 15.06.1991 DE 4119759; 06.02.1992 DE 4203329
(43) Veröffentlichungstag der Anmeldung: 23.12.1992
(73) Patentinhaber: Krupp VDM GmbH, 58791 Werdohl (DE)
(72) Erfinder: Bitter, Dieter, Dipl.-Ing., W-5950 Finnentrop (DE); Bornkessel, Eberhard, W-5768 Sundern 12 (DE); Schnabel, Horst, W-5982 Neuenrade (DE)
(74) Vertreter: Cohausz & Florack Patentanwälte

(56) Entgegenhaltungen:
- DE-A- 1 908 888
- US-A- 2 760 346
- US-A- 3 334 925
- US-A- 3 830 262
- US-A- 4 089 453

## Beschreibung

Die Erfindung betrifft eine gasdichte Verbindung zwischen Rohren kleinen Durchmessers aus Metallen oder Metallegierungen unterschiedlicher Schmelzpunkte, bei der der Endbereich des ersten Rohres aufgeweitet und in diese Aufweitung das Rohrende des zweiten Rohres eingesteckt ist und bei der ein ursprünglich vorhandener Lötspalt zwischen Aufweitung und dem eingesteckten zweiten Rohr mit gegenüber dem Metall oder der Metallegierung höheren Schmelzpunktes niedriger schmelzendem Werkstoff gefüllt ist.

Bekannt ist eine solche Verbindung durch offenkundige Benutzung in Form eines an seinem Ende aufgeweiteten Aluminiumrohres, in das ein Kupferrohr eingesteckt ist. Diese Steckverbindung ist dabei mit großer Präzision, nämlich sehr engem Lötspalt gefertigt, sodaß sich Aufweitung und Rohrende ohne Zuführung von Fremdlot unter Wärme unmittelbar miteinander verbinden können. Die Verbindung selbst ist mehr eine Diffusionsschweißverbindung als eine Lötverbindung.

Die Deutsche Offenlegungsschrift 1.908.888 zeigt ein anderes Rohrverbindungssystem, bei dem die Rohrenden über eine Rohrmuffe mit konischen Einsteckenden - nicht unmittelbar miteinander - verbunden werden und wobei im Lötspalt stets ein Einsatzstück aus Lötmaterial vorgesehen werden muß.

Da die oben beschriebene unmittelbare Verbindung eines Kupferrohres mit einem Aluminiumrohr hohe Präzision in der Fertigung erfordert, wird nach wie vor auch das elektrische Stumpfpreßschweißen zum Verbinden der Stirnflächen dieser Rohre unterschiedlichen Werkstoffes eingesetzt und es werden die damit verbundenen zusätzlichen Fertigungsschritte Außenentgraten, Innenentgraten, Ausspülen der Innenspäne und Trocknen in Kauf genommen.

Ein technischer Nachteil des Stumpfpreßschweißens liegt weiterhin darin, daß derzeit ein Rohrdurchmesser von 7,5 mm bei einer Wanddicke von etwa 1 mm nicht mit hinreichender Betriebssicherheit in der Fertigung unterschritten werden kann, obwohl für insbesondere diese Cu/Al-Rohrverbindungen und deren verschiedene Einsatzzwecke der Durchmesserbereich um zunächst 6,5 mm wünschenswert wäre.

Aufgabe der Erfindung ist es, die geschilderten dem Stand der Technik anhaftenden Nachteile zu vermeiden und eine zuverlässig gasdichte Rohrverbindung zwischen Rohren aus Werkstoffen unterschiedlichen Schmelzpunktes, insbesondere zwischen einem Kupferrohr und einem Aluminiumrohr zu schaffen. Auch ist es eine Nebenaufgabe der Erfindung, ein geeignetes Herstellungsverfahren und eine entsprechende Vorrichtung zum Herstellen der gasdichten Verbindung bereitzustellen.

Erfindungsgemäß wird daher vorgeschlagen, daß das erste die Aufweitung aufweisende Rohr aus dem Metall oder der Metallegierung mit dem höheren Schmelzpunkt besteht, daß die zylindrische Innenmantelfläche der Aufweitung über einen Innenkonus in den nicht aufgeweiteten Bereich der Innenwand des ersten Rohres übergeht, daß das Rohrende des zweiten Rohres eine am Innenkonus anliegende entsprechend konische Ringfläche aufweist und daß die diese Ringfläche bildende, dem Innenkonus zugekehrte Grenzschicht des Rohrendes des ersten Rohres und die Füllung des Lötspaltes in situ aufgeschmolzener und wiedererstarrter Werkstoff des zweiten Rohres ist.

Eine solche erfindungsgemäße Rohrverbindung ist zuverlässig dicht und zwischen Werkstoffen herstellbar, die sich kaum direkt miteinander sicher verlöten lassen, wie dies beispielsweise zwischen Kupfer und Aluminium der Fall ist. Die am Innenkonus dicht anliegende Ringfläche sorgt dabei primär für die Abdichtung, während das im Spalt zwischen der Aufweitung und dem Rohrende erstarrte Material die nötige Verbindungsfestigkeit sichert.

In Anspruch 2 ist als bevorzugte Werkstoffkombination niedergelegt, daß das die Aufweitung aufweisende erste Rohr ein Kupferrohr und das zweite Rohr ein Aluminiumrohr ist.

Die so hergestellte Verbindung kann im Bereich der inneren Übergangsstelle bei der betriebsmäßigen Serienfertigung entweder zu einer leichten umlaufenden Einbuchtung oder zu einer kleinen umlaufenden Innenwulst führen, die gegenüber einem Grat beim Stumpfschweißen, meist unerheblich ist, bei Rohren kleinen Durchmessers aber schon eine gewisse Drosselwirkung entfalten kann. Vor allem aber beim Erneuern der Verbindung im Zuge einer Reparatur, beispielsweise der Reparatur eines Kühlschrankes, ist es äußerst schwierig, das Erwärmen zum Löten und den Vorschub des niedriger schmelzenden Rohres genau genug einzuhalten, sodaß nur in Ausnahmefällen die Rohrverbindung selbst repariert werden kann und sodaß dann ganze Kreisläufe ausgetauscht werden müssen, um eine zu große Querschnittsverengung durch eine Reparaturmaßnahme auszuschließen. Bei Rohrdurchmesser von 7,5 mm (mit einer Wanddicke von etwa 1 mm) oder für spezielle Zwecke angestrebten Durchmesserbereich um zunächst 6,5 mm ist eine Innenwulst möglichst auszuschließen.

Diesen Gegebenheiten wird eine Weiterentwicklung der Erfindung nach Anspruch 3 gerecht, die vorsieht, daß im Endbereich des zweiten Rohres eine metallische, dem Innendurchmesser des zweiten Rohres angepaßte Hülse steckt, die Kontakt mit diesem zweiten Rohr hat und die über die Stirnfläche des zweiten Rohres hinaus sich in das erste Rohr erstreckt und die weiterhin aus einem Werkstoff besteht, der einen höheren Schmelzpunkt hat, als das Metall oder die Metallegierung, aus dem das zweite Rohr besteht.

Nach Anspruch 4 wird weiterhin vorgeschlagen, daß die Hülse eine geringere Wandstärke aufweist als die zu verbindenden Rohre und aus Stahl besteht.

Nach einer in Anspruch 5 niedergelegten Ausgestaltung der Erfindung ist die Rohrverbindung derart aufgebaut, daß zwischen dem Innenkonus und dem Beginn des nicht aufgeweiteten Bereiches des ersten Rohres eine Erweiterung und an deren Ende ein kurzer Übergangskonus zum nicht aufgeweiteten Bereich des ersten Rohres liegen, daß der Außendurchmesser der Hülse größer ist als der Innendurchmesser des nicht aufgeweiteten Bereiches des ersten Rohres und kleiner ist als der Innendurchmesser der Erweiterung und daß ein Längenabschnitt der Hülse in der Erweiterung liegt.

So läßt sich bei entsprechender Dimensionierung der Erweiterung, die in ihrem Innendurchmesser regelmäßig nur geringfügig über den des nicht erweiterten Bereiches des Rohres hinausgeht, eine Durchströmsquerschnittsveränderung an der Verbindungsstelle minimieren oder ganz vermeiden. Der kurze Übergangskonus am Ende der Erweiterung kann als axialer Anschlag für den Vorschub der Hülse beim Herstellen der Verbindung genutzt werden.

Im übrigen sollte das zweite Rohr eine Wandeindrückung aufweisen, die innerer Anschlag zur Fixierung der rohraxialen Lage der Hülse ist.

Der auf die Gesamtbedingungen abgestimmte Innendurchmesser der Hülse bestimmt nun den Innendurchmesser im Übergangsbereich und beseitigt die Gefahr einer inneren Wulstbildung gänzlich. So erübrigt sich auch eine vorsorgliche Innenkontrolle der fertigen Rohrverbindung. Durch die eingebaute Hülse wird sichergestellt, daß eventuelle Schwankungen in den Betriebsbedingungen bei der Herstellung der Rohrverbindung oder Unzulänglichkeiten bei der Fertigung auf einer Baustelle die Einhaltung eines vorgegebenen Innendurchmessers im Übergangsbereich der beiden Rohre nicht beeinträchtigen.

Bevorzugt findet die Erfindung nach Anspruch 7 bei der Herstellung von Kühlgeräten Anwendung, nämlich dergestalt, daß das zweite Rohr Saugrohr eines Verdampfers eines Kompressor-Kühlgerätes und das erste Rohr Verbindungsrohr zur Saugseite des Kompressors ist.

Gattungsbildend für den Anspruch 8 ist ein Verfahren zum Herstellen einer gasdichten Rohrverbindung zwischen Rohren aus metallischen Werkstoffen unterschiedlicher Schmelzpunkte, insbesondere einem Kupferrohr und einem Aluminiumrohr, wobei das erste der Rohre an seinem Ende aufgeweitet und das Rohrende des zweiten Rohres in die dieses mit lötspaltgroßem Spiel aufnehmende Aufweitung eingesteckt wird, worauf die Steckverbindung erwärmt und dabei der Lötspalt mit gegenüber dem metallischen Werkstoff höheren Schmelzpunktes niedriger schmelzendem Werkstoff gefüllt wird.

Dieses Verfahren wird nun dadurch präzisiert, daß das Rohr aus höher schmelzendem Werkstoff aufgeweitet und ein innen konischer Übergang zwischen der zylindrischen Aufweitung und dem angrenzenden Rohrbereich hergestellt wird, daß gegebenenfalls der Endbereich des Rohres niedriger schmelzenden Werkstoffes außen und die Aufweitung innen mit einem Flußmittel benetzt werden, daß der Endbereich in die Aufweitung bis zum Anschlag an den konischen Übergang eingesteckt wird, daß die Aufweitung und der konische Übergang erwärmt werden, bis das niedriger schmelzende Rohr in der Aufweitung partiell aufschmilzt, worauf die Rohre relativ zueinander und aufeinander zu, einem vorgegebenen Vorschub entsprechend, in Rohrachsrichtung vorgeschoben werden und die Wärmezufuhr eingestellt wird.

Soll im Verbindungsbereich eine innenliegende Hülse vorgesehen werden, so wird nach Anspruch 9 derart verfahren, daß die metallische Hülse in den Endbereich des niedriger schmelzenden Rohres mit einem Teil der Hülsenlänge eingeschoben wird, bevor der Endbereich des niedriger schmelzenden Rohres in die Aufweitung des höher schmelzenden Rohres eingesteckt wird.

Zur Gattungsbildung des Anspruches 10 wird von durch Benutzung bekannten Anlagen ausgegangen werden, nämlich von einer Anlage mit einer Spannvorrichtung zum vertikalen Einspannen eines Rohres und mit einer auf den über der Spannvorrichtung liegenden Endbereich eines eingespannten Rohres gerichteten Wärmequelle.

Diese Anlage ist erfindungsgemäß ergänzt durch eine über der Spannvorrichtung positionierte Führungsvorrichtung für ein mit dem eingespannten Rohr fluchtendes weiteres Rohr, wobei die Führungsvorrichtung zwischen einstellbaren Positionen vertikal verschieblich und in einer oberen Betriebsposition vom eingespannten Rohr über das auf dem eingespannten Rohr aufsitzende weitere Rohr gehalten ist und dabei unter definierter Auflast steht, und durch einen das Verlassen der oberen Betriebsposition in Richtung auf eine anschlagdefinierte untere Betriebsposition signalisierenden Geber, der über eine Steuerleitung mit der Steuervorrichtung der Anlage verbunden ist.

Die Auflast läßt sich dadurch erzeugen und beenden, daß das höher schmelzende Rohr während des Erwärmens unter der Auflast eines den späteren Vorschub bewirkenden Elementes, vorzugsweise einer Feder steht und durch den Vorschub ein das Erwärmen beendendes Steuersignal ausgelöst wird.

Im übrigen kann eine Anlage Verwendung finden, bei der über den Umfang eines Karussells mehrere Spannvorrichtungen verteilt sind, die nacheinander durch taktweises Drehen des Karussells die zugeordneten stationären Arbeitsstationen anlaufen, zu denen eine Aufgabestation, eine Heizstation und eine Entnahmestation gehören, wobei die Führungsvorrichtung der Heizstation zugeordnet und die Drehvorrichtung des Karussells über die Steuervorrichtung vom Geber gesteuert und jeweils mit dem Ingangsetzen des Karussells die Rückführung der Führungsvorrichtung in ihre obere Betriebsposition eingeleitet wird.

Nachfolgend wird die Erfindung anhand der beigefügten, teilweise schematischen Abbildungen beispielhaft beschrieben.

Es zeigt
- Fig. 1.: eine gasdichte Rohrverbindung
- Fig. 2: eine erste Arbeitsposition bei der Herstellung der Verbindung eines Kupferrohres mit einem Aluminiumrohr
- Fig. 3: eine zweite Arbeitsposition
- Fig. 4.: eine gasdichte Rohrverbindung mit Hülse
- Fig. 5: eine Anfangsphase bei der Herstellung der Verbindung nach Fig. 4 zwischen einem Kupferrohr und einem Aluminiumrohr
- Fig. 6: eine Endphase bei der Herstellung dieser Verbindung
- Fig. 7: eine Rohrverbindung am Verdampfer eines Kühlgerätes

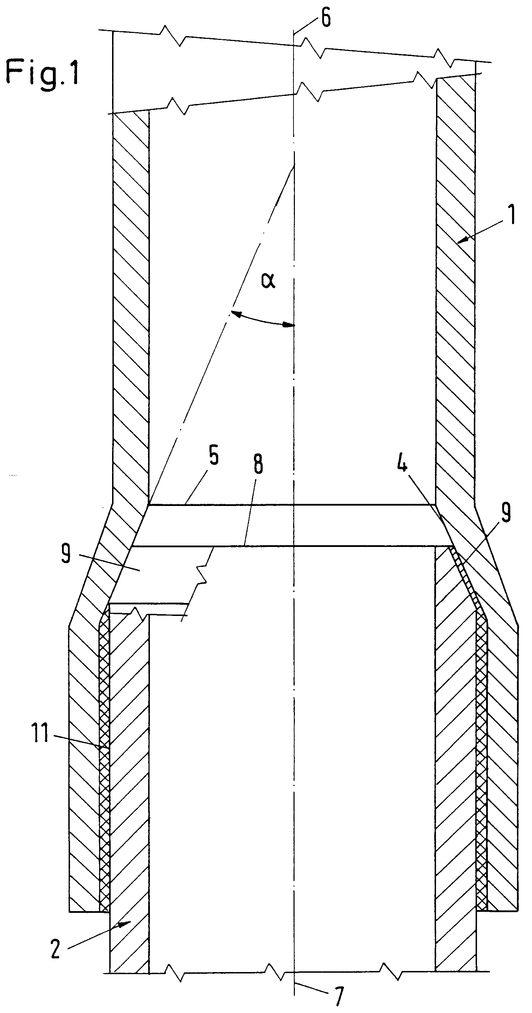

Fig. 1 zeigt die gasdichte Verbindung zwischen einem ersten Rohr 1 aus Kupfer und einem zweitem Rohr 2 aus Aluminium. Beide Rohre 1,2 sind nur in ihrem Verbindungsbereich dargestellt, wobei das erste Rohr 1 teilweise im Schnitt, das zweite Rohr 2 ganz im Schnitt gezeichnet ist.

Das erste Rohr 1 ist an seinem Endbereich zu einer Aufweitung 3 aufgedornt, wobei die zylindrische Innenmantelfläche der Aufweitung 3 über einen Innenkonus 4 am inneren Übergangsbereich 5 in die übrige Innenmantelfläche des ersten Rohres 1 übergeht. Die eine Rohrachse 6 des ersten Rohres 1 fällt mit der anderen Rohrachse 7 des zweiten Rohres 2 zusammen.

Die Stirnfläche 8 des zweiten Rohres 2 hat in dem hier gezeigten Beispiel noch einen deutlichen Abstand vom inneren Übergangsbereich 5, bzw. vom Ende des Innenkonus 4.

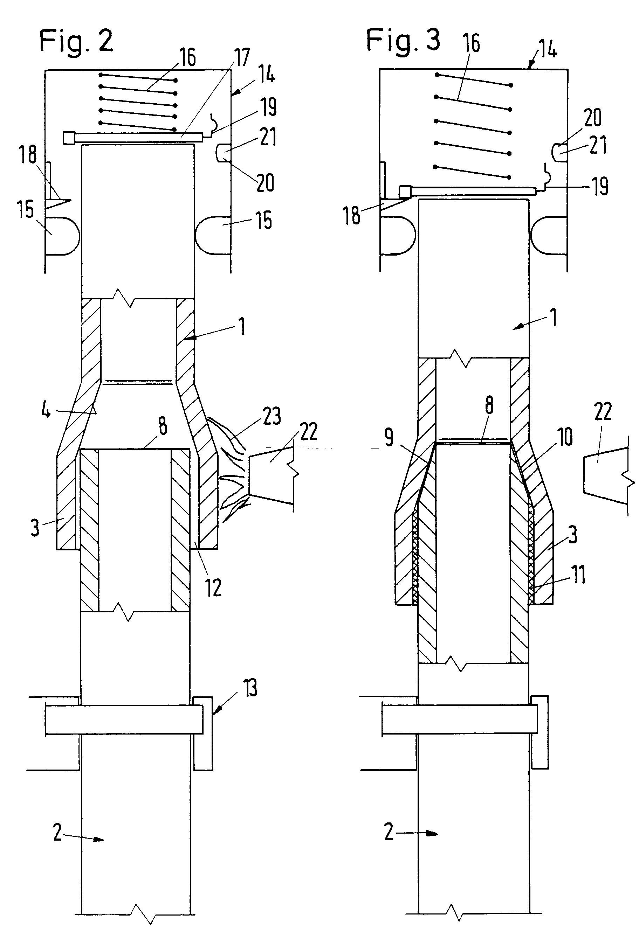

Das zweite Rohr 2 liegt mit einer Ringfläche 9 dicht am Innenkonus 4 an, wobei die Ringfläche 9 konischer Außenmantel einer Grenzschicht 10 ist, die in situ, d. h. in der Steckverbindung während ihrer Herstellung aufgeschmolzener und wieder erstarrter Werkstoff des zweiten Rohres 2, also wieder erstarrtes Aluminium ist. Solcher aufgeschmolzener und wieder erstarrter Werkstoff bildet auch die Füllung 11 des (in Fig. 2 bezeichneten) Lötspaltes 12.

Der Innenkonus 4, der im Kontaktbereich mit der Ringfläche 9 im wesentlichen die gasdichte Abdichtung bewirkt, hat hier einen Neigungswinkel α zur Achse 6 des ersten Rohres 1 von etwa 30 °.

Insgesamt ist Fig. 1 in vergrößertem Maßstab und der Deutlichkeit halber nicht maßstäblich dargestellt. Dies gilt insbesondere für die Dicke der Füllung 11 und der Grenzschicht 10. Bei einer gemäß der Erfindung hergestellten Rohrverbindung war ein Cu-Rohr mit 6 mm Durchmesser und einer Wandstärke von 0,65 mm so weit aufgedornt worden, daß sich ein Al-Rohr 7 x 1 mm leicht einschieben ließ. Der Lötspalt 12 (siehe Fig. 2) zwischen der Aufweitung 3 und dem Ende des zweiten Rohres 2 betrug etwa 0,2 mm. In der Produktion wird dieser Lötspalt 12 auf 0,05 bis 0,2 mm eingestellt.

Fig. 2 zeigt die Herstellung einer Rohrverbindung in einer ersten und Fig. 3 in einer zweiten Phase, wobei auch hier der Lötspalt 12 der deutlichen Darstellung wegen zu groß dargestellt ist. Es wird so aber möglich, zu zeigen, daß beim Zusammenstecken der Rohre 1,2 durch einen Grat an der Stirnfläche 8 des zweiten Rohres 2 oder durch eine Unrundheit des vorderen Endes des Rohres 2 nicht auf seinem ganzen Umfang auf dem Innenkonus 4 aufsitzt. Dies beeinträchtigt jedoch die Herstellung der Rohrverbindung nicht.

In Fig. 2 ist das zweite Rohr 2 in eine Spannvorrichtung 13 eingespannt, die das zweite Rohr 2 in einer axial bestimmten Position hält. Das erste Rohr 1, eine kurzes Rohrstück, ist von oben auf das zweite Rohr 2 aufgesteckt.

Das obere Ende des ersten Rohres 1 liegt in einem hoch- oder aufklappbaren Führungsgehäuse 14 an seitlichen Führungselementen 15 gleitend an. Eine vorgespannte Feder 16 wirkt auf eine Führungsvorrichtung 17 und setzt damit das erste Rohr 1 unter eine nach unten gerichteten Auflast.

Weiterhin ist am Führungsgehäuse 14 ein Anschlag 18 für die Führungsvorrichtung 17 und an der Führungsvorrichtung 17 ein Auslöser 19 vorgesehen. Am Führungsgehäuse 14 ist ein Geber 20 befestigt, zu dem eine Steuerleitung 21 gehört.

Zum Erzeugen von Wärme ist ein Gasbrenner 22 vorgesehen, dessen Brennerflamme 23 angedeutet ist.

Beide Rohre 1,2, das erste Rohr innen und das zweite Rohr außen sind mit einem nicht dargestellten für das Aufschmelzen von Aluminium geeigneten Flußmittel benetzt. Das erste Rohr 1 wird durch den Brenner 22 im Bereich der Aufweitung 3 erhitzt. Sobald die Aufweitung und insbesondere der konische Übergangsbereich zum übrigen Teil des ersten Rohres 1 soweit erwärmt ist, daß das zweite Rohr 2 zunächst im Kontaktbereich mit dem Innenkonus 4 aufzuschmelzen beginnt, schiebt sich das erste Rohr 1 unter der Auflast der Feder 16 und unter zunehmender Aufschmelzung des über den Innenkonus 4 größer werdenden Kontaktbereiches nach unten. Durch das Abschmelzen am Innenkonus wird Aluminium zur Bildung der Grenzschicht 10 und zur Füllung 11 des Lötspaltes 12 frei.

Die Bewegung des ersten Rohres 1 von seiner in Fig. 2 dargestellten Position, in der die Führungsvorrichtung 17 in ihrer oberen Betriebsposition sitzt, nach unten wird über den am Führungsgehäuse 14 einstellbaren Anschlag 18 begrenzt.

Die untere Betriebsposition, bei der die Rohrverbindung hergestellt ist, ist in Fig. 3 dargestellt. Auf ihrem Weg von der in Fig. 2 dargestellten oberen Betriebsposition zu der in Fig. 3 dargestellten unteren Betriebsposition erhält die Führungsvorrichtung 17 mittels ihres Auslösers 19 Kontakt mit dem Geber 20 und löst dabei ein Steuersignal aus, welches über die Steuerleitung 21 beispielsweise den Brenner 22 abschaltet.

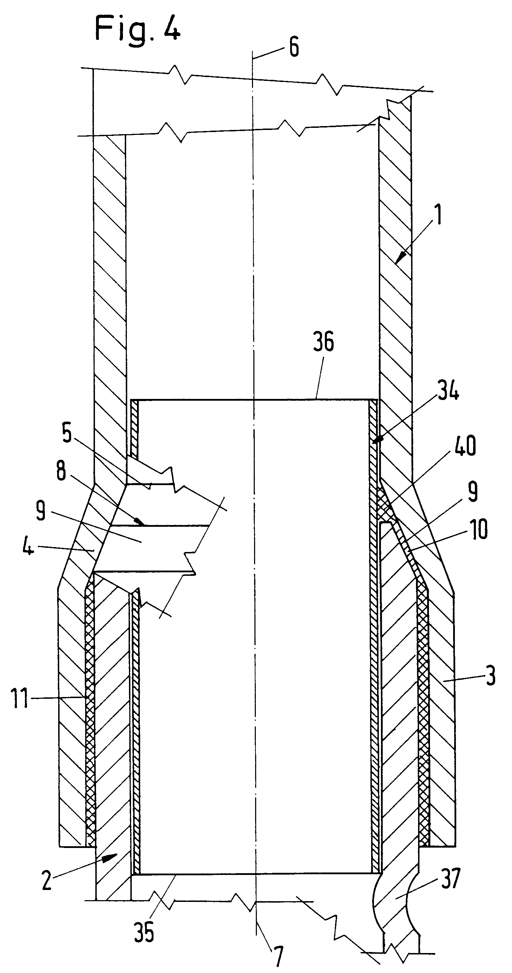

Fig. 4 zeigt wiederum die gasdichte Verbindung zwischen einem ersten Rohr 1 aus Kupfer und einem zweitem Rohr 2 aus Aluminium. Beide Rohre 1,2 sind nur in ihrem Verbindungsbereich dargestellt, wobei das erste Rohr 1 im wesentlichen im Schnitt, das zweite Rohr 2 ganz im Schnitt gezeichnet ist.

Die Stirnfläche 8 des zweiten Rohres 2 hat in dem hier gezeigten Beispiel noch einen deutlichen Abstand vom inneren Übergangsbereich 5, bzw. vom Ende des Innenkonus 4.

Das zweite Rohr 2 liegt mit der konischen Ringfläche 9 dicht am Innenkonus 4 an, wobei der konische Außenmantel der Ringfläche 9 eine Grenzschicht 10 ist, die, wie die Füllung 11, in situ, d. h. in der Steckverbindung während ihrer Herstellung aufgeschmolzenes und wieder erstarrtes Aluminium ist.

In den Endbereich des zweiten Rohres 2 ist eine Hülse 34 eingesteckt, die an einer Eindrückung 37 im zweiten Rohr 2 mit ihrem einen Ende 35 anliegt. Das andere Ende 36 der Hülse 34 liegt im nicht aufgeweiteten Teil des ersten Rohres 1. Die Hülse 34 überdeckt den inneren Verbindungsbereich 40. Die in das Aluminiumrohr mit Passung eingesteckte Hülse 34, häufig eine Hülse aus Edelstahl, kann recht geringe Wandstärke haben, da sie in der Rohrverbindung selbst keine kraftübertragenden Funktionen hat. Für das Schweißen von Aluminiumrohranschlüssen an Verdampfern aus Aluminium gängige Edelstahlhülsen mit ca. 0,1 mm Wandstärke lassen sich hierfür ebenfalls einsetzen. Regelmäßig ist die Wandstärke der Hülse 34 wesentlich geringer als die der Rohre 1 und 2.

Der Innenkonus 4, der im Kontaktbereich mit der Ringfläche 9 im wesentlichen die gasdichte Abdichtung bewirkt, hat hier einen Neigungswinkel zur Achse 6 des ersten Rohres 1 von etwas unter 30°, doch sind, wie Fig. 2 und Fig. 3 zeigen, auch geringere Neigungswinkel möglich.

Ein Teil der Hülse 34 ist im Bereich des Innenkonus 9 herausgeschnitten, um die Lage der Stirnfläche 8 des zweiten Rohres 2 und den inneren Übergangsbereich 5 des ersten Rohres 1 zu zeigen. Insgesamt ist Fig. 4 in vergrößertem Maßstab und der Deutlichkeit halber nicht maßstäblich dargestellt. Dies gilt insbesondere für die Dicke der Füllung 11 und der Grenzschicht 10. Bei einer gemäß der Erfindung hergestellten Rohrverbindung war ein Cu-Rohr mit 6 mm Durchmesser und einer Wandstärke von 0,65 mm so weit aufgedornt worden, daß sich ein Al-Rohr 7 x 1 mm mit einer Edelstahlhülse 4,9 x 0,1 mm (70 mm lang) leicht einschieben ließ. Der Lötspalt 12 (siehe Fig. 2) war etwa 0,2 mm groß.

Wenn durch die Erfindung auch gezielt der untere Bereich von Rohren kleinen Durchmessers erfaßt werden soll, so läßt sich die Erfindung ebenso vorteilhaft bei Rohrdurchmessern um 30 bis 40 mm einsetzen.

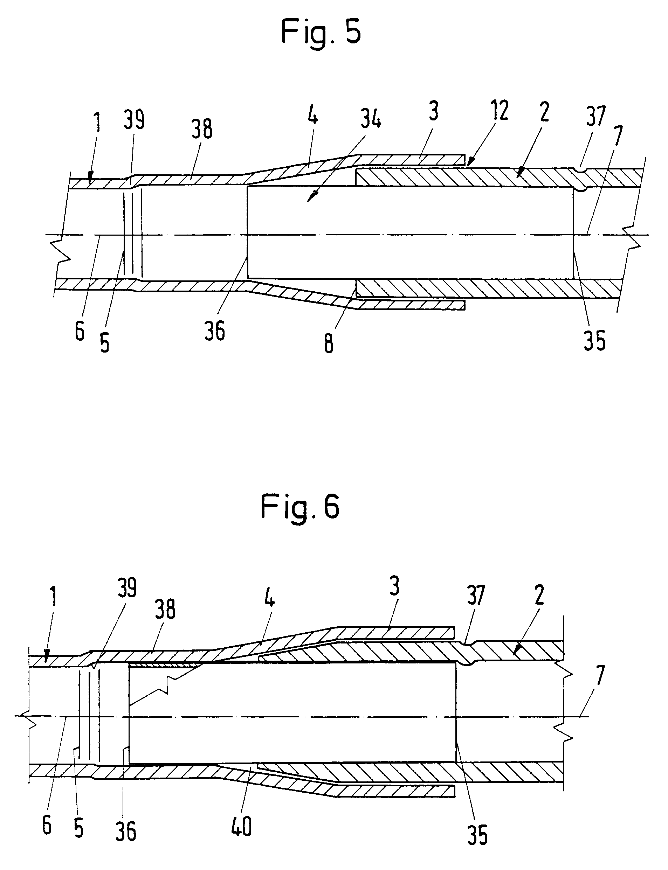

Fig. 5 zeigt die Herstellung einer Rohrverbindung in einer Anfangsphase und Fig. 6 in einer Endphase, wobei auch hier der Lötspalt 12 der Deutlichkeit wegen zu groß dargestellt ist.

In der Fertigungsphase nach Fig. 5 ist das zweite Rohr 2 mit der an der Wandeindrückung 37 anliegenden Hülse 34 in die Aufweitung 3 eingesteckt und liegt am Innenkonus 4 an. An den Innenkonus 4 schließt sich eine Erweiterung 38 an, die über einen kurzen konischen Übergang 39 in den nicht aufgeweiteten Bereich des ersten Rohres 1 übergeht. Es versteht sich von selbst, daß die Aufweitung 3, der Innenkonus 4, die Erweiterung 38 und der Übergang 39 mit ein und demselben Aufdornwerkzeug in einem Arbeitsgang hergestellt werden. So werden für ovale Rohrverbindungen ein ovaler Dorn und natürlich auch eine ovale Hülse verwendet.

Um von der Fertigungsphase nach Fig. 5 zu der nach Fig. 6 zu kommen, werden die Aufweitung 3 und der Teil des Innenkonus 4 erwärmt, bis die vom Flußmittel mit abhängige Löttemperatur erreicht ist. Dabei sei das erste Rohr 1 gehalten, das zweite Rohr 2 stehe unter einer auf das erste Rohr 1 gerichteten Auflast einer nicht dargestellten Feder. Unter der axialen Auflast schiebt sich das zweite Rohr 2 in die Aufweitung 3 wobei dessen Stirnfläche 8 von außen nach innen abgeschmolzen wird und den Lötspalt 12 füllt. Der Restringraum 40 muß sich nicht mit aufgeschmolzenem Material füllen, sollte dies aber eintreten und ein gewisser Stau entstehen, so wird der aufgeschmolzene Werkstoff durch den Lötspalt unschädlicherweise nach außen gedrückt.

Bei dem in Fig. 6 gezeigten Beispiel liegen das hintere Ende 35 der Hülse 34 etwa in einer Ebene mit dem Ende der Aufweitung 3 und die Wandeindrückung 37 außerhalb der Aufweitung 3, aber dicht an derselben. Das vordere Ende 36 der Aufweitung hat Abstand von dem konischen Übergang 39 am Ende der Erweiterung 38, in der ein wesentlicher Teil der Hülse 34 liegt. Alternativ könnte die Eindrückung 37 auch innerhalb der Aufweitung liegen.

Man kann die Dimensionierungen aber auch so aufeinander abstimmen, daß die Hülse 34 am konischen Übergang 39 anschlägt.

Im übrigen ist die Hülse 34 in Fig. 5 nicht geschnitten, in Fig. 6 teilweise aufgeschnitten gezeichnet.

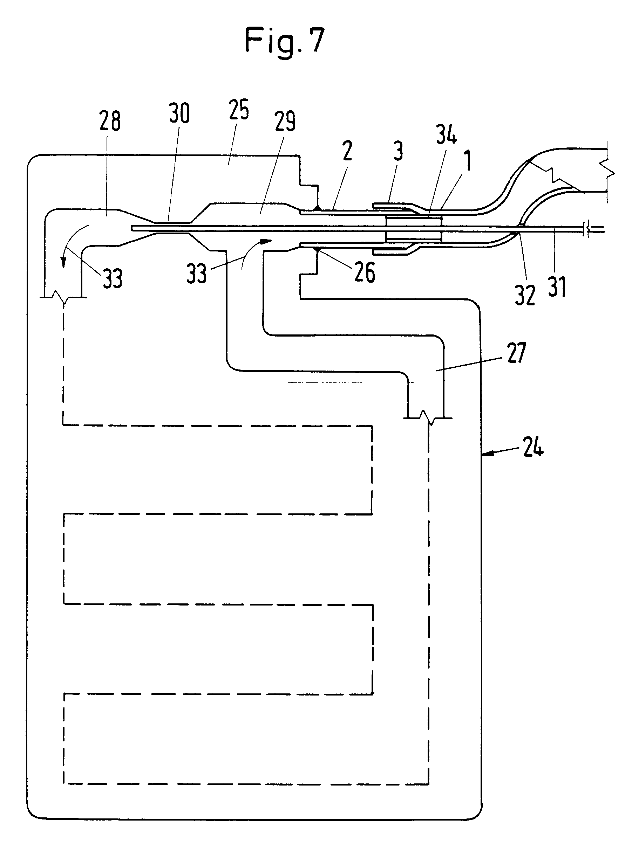

Fig. 7 zeigt einen Verdampfer 24 für den Kühlmittelkreislauf eines Kompressor-Kühlgerätes. Der Verdampfer 24 hat als Grundkörper eine aus zwei miteinander verbundenen Aluminiumblechen bestehende Platine 25, in der ein Kühlmittelkanal 27 mäanderartig verläuft. Das zweite Rohr 2 ist in die Platine 25 eingesetzt und über eine Schweißnaht 26 mit dieser verbunden und bildet den sogenannten Saugrohranschluß. Dieser Saugrohranschluß enthält in der Verbindung des ersten Rohres 1 mit dem zweiten Rohr 2 die Hülse 34. Abweichend von dem hier gewählten Beispiel wird in der Serienfertigung der Verdampfer eine Gestaltung nach Fig. 6 bevorzugt verwendet.

Das Saugrohr, nämlich das zweite Rohr 2, mündet in den Auslaßbereich 29 des Kühlmittelkanales 27, dessen Einlaßbereich 28 vom Auslaßbereich 29 durch eine Einschnürung 30 getrennt ist. In der Einschnürung 30 ist ein Drossel-Kapillarrohr 31 eingepaßt, das über einen Durchbruch 32 in einem Bogen des ersten Rohres 1 aus diesem herausgeführt ist. Über das Drossel-Kapillarrohr 31 wird das Kühlmittel zugeführt. Pfeile 33 geben die Fließrichtung an. Das Drossel-Kapillarrohr 31 wird von der Druckseite eines nicht dargestellten Kompressors gespeist. Das erste Rohr 1 kann als Verbindungsrohr zum Kompressor unmittelbar an den Saugstutzen des Kompressors angeschlossen werden.

Im Rahmen der Erfindung werden unter den genannten Rohrwerkstoffen Kupfer und Aluminium nicht nur reines Kupfer und reines Aluminium verstanden, sondern auch Kupfer- bzw. Aluminiumlegierungen, deren Grundmetall überwiegend Kupfer bzw. Aluminium ist.

## Patentansprüche

1. Gasdichte Verbindung zwischen Rohren kleinen Durchmessers aus Metallen oder Metallegierungen unterschiedlicher Schmelzpunkte, bei der der Endbereich des ersten Rohres aufgeweitet und in diese Aufweitung das Rohrende des zweiten Rohres eingesteckt ist und bei der ein ursprünglich vorhandener Lötspalt zwischen Aufweitung und dem eingesteckten zweiten Rohr mit gegenüber dem Metall oder der Metallegierung höheren Schmelzpunktes niedriger schmelzendem Werkstoff gefüllt ist,
**dadurch gekennzeichnet,**
- daß das erste die Aufweitung (3) aufweisende Rohr (1) aus dem Metall oder der Metallegierung mit dem höheren Schmelzpunkt besteht,
- daß die zylindrische Innenmantelfläche der Aufweitung (3) über einen Innenkonus (4) in den nicht aufgeweiteten Bereich der Innenwand des ersten Rohres (1) übergeht,
- daß das Rohrende des zweiten Rohres (2) eine am Innenkonus (4) anliegende entsprechend konische Ringfläche (9) aufweist und
- daß die diese Ringfläche (9) bildende, dem Innenkonus (4) zugekehrte Grenzschicht (10) des Rohrendes des zweiten Rohres (2) und die Füllung (11) des Lötspaltes (12) in situ aufgeschmolzener und wiedererstarrter Werkstoff des zweiten Rohres (2) ist.

2. Gasdichte Verbindung nach Anspruch 1,
**dadurch gekennzeichnet,**
daß das die Aufweitung (3) aufweisende erste Rohr (1) ein Kupferrohr und das zweite Rohr (2) ein Aluminiumrohr ist.

3. Gasdichte Verbindung nach einem der Ansprüche 1 und 2,
**dadurch gekennzeichnet,**
daß im Endbereich des zweiten Rohres (2) eine metallische, dem Innendurchmesser des zweiten Rohres (2) angepaßte Hülse (34) steckt, die Kontakt mit diesem zweiten Rohr (2) hat und die über die Stirnfläche (8) des zweiten Rohres (2) hinaus sich in das erste Rohr (1) erstreckt und die weiterhin aus einem Werkstoff besteht, der einen höheren Schmelzpunkt hat, als das Metall oder die Metallegierung, aus dem das zweite Rohr (2) besteht.

4. Gasdichte Verbindung nach Anspruch 3,
**dadurch gekennzeichnet,**
daß die Hülse (34) eine geringere Wandstärke aufweist als die zu verbindenden Rohre (1 und 2) und aus Stahl besteht.

5. Gasdichte Verbindung nach einem der Ansprüche 3 und 4,
**dadurch gekennzeichnet,**
daß zwischen dem Innenkonus (4) und dem Beginn des nicht aufgeweiteten Bereiches des ersten Rohres (1) eine Erweiterung (38) und an deren Ende ein kurzer Übergangskonus (39) zum nicht aufgeweiteten Bereich des ersten Rohres (1) liegen, daß der Außendurchmesser der Hülse (34) größer ist als der Innendurchmesser des nicht aufgeweiteten Bereiches des ersten Rohres (1) und kleiner ist als der Innendurchmesser der Erweiterung (38) und daß ein Längenabschnitt der Hülse (34) in der Erweiterung (38) liegt.

6. Gasdichte Verbindung nach einem der Ansprüche 3 bis 5,
**dadurch gekennzeichnet,**
daß das zweite Rohr (2) eine Wandeindrückung (37) aufweist, die innerer Anschlag zur Fixierung der rohraxialen Lage der Hülse (34) ist.

7. Gasdichte Verbindung nach einem der Ansprüche 1 bis 6,
**dadurch gekennzeichnet,**
daß das zweite Rohr (2) Saugrohr eines Verdampfers (24) eines Kompressor-Kühlgerätes und das erste Rohr (1) Verbindungsrohr zur Saugseite des Kompressors ist.

8. Verfahren zum Herstellen einer gasdichten Rohrverbindung zwischen Rohren aus metallischen Werkstoffem unterschiedlicher Schmelzpunkte, insbesondere einem Kupferrohr und einem Aluminiumrohr, wobei das erste der Rohre an seinem Ende aufgeweitet und das Rohrende des zweiten Rohres in die dieses mit lötspaltgroßem Spiel aufnehmende Aufweitung eingesteckt wird, worauf die Steckverbindung erwärmt und dabei der Lötspalt mit gegenüber dem metallischen Werkstoff höhren Schmelzpunktes niedriger
schmelzendem Werkstoff gefüllt wird, **dadurch gekennzeichnet,**
- daß das höher schmelzende Rohr aufgeweitet und ein innen konischer Übergang zwischen der zylindrischen Aufweitung und dem angrenzenden Rohrbereich hergestellt wird,
- daß gegebenenfalls der Endbereich des niedriger schmelzenden Rohres außen und die Aufweitung innen mit einem Flußmittel benetzt werden,
- daß der Endbereich des niedriger schmelzenden Rohres in die Aufweitung des höher schmelzenden Rohres bis zum Anschlag an den konischen Übergang eingesteckt wird,
- daß die Aufweitung und der konische Übergang erwärmt werden, bis das niedriger schmelzende Rohr in der Aufweitung partiell aufschmilzt, worauf die Rohre relativ zueinander und aufeinander zu einem vorgegebenen Vorschub entsprechend in Rohrachsrichtung vorgeschoben werden und die Wärmezufuhr eingestellt wird.

9. Verfahren nach Anspruch 8,
**dadurch gekennzeichnet,**
- daß in den Endbereich des niedriger schmelzenden Rohres eine metallische Hülse mit einem Teil der Hülsenlänge eingeschoben wird, bevor der Endbereich des niedriger schmelzenden Rohres in die Aufweitung des höher schmelzenden Rohres eingesteckt wird.

10. Anlage zur Durchführung des Verfahrens nach Anspruch 8, mit einer Spannvorrichtung zum vertikalen Einspannen eines Rohres und mit einer auf den über der Spannvorrichtung liegenden Endbereich eines eingespannten Rohres gerichteten Wärmequelle,
**gekennzeichnet durch**
- eine über der Spannvorrichtung (13) positionierte Führungsvorrichtung (17) für ein mit dem eingespannten Rohr (2) fluchtendes weiteres Rohr (1), wobei die Führungsvorrichtung (17) zwischen einstellbaren Positionen vertikal verschieblich und in einer oberen Betriebsposition vom eingespannten Rohr (2) über das auf dem eingespannten Rohr (2) aufsitzende weitere Rohr (1) gehalten ist und dabei unter definierter Auflast steht,
- und durch einen das Verlassen der oberen Betriebsposition in Richtung auf eine anschlagdefinierte untere Betriebsposition signalisierenden Geber (20), der über eine Steuerleitung (21) mit der Steuervorrichtung der Anlage verbunden ist.

## Claims

1. A gastight connection between small diameter pipes made from metals or metal alloys having different melting points, wherein the end zone of the first pipe is widened and the end of the second pipe is inserted into said widening, a brazing gap originally present between the widened portion and the inserted second pipe being filled with a lower-melting material having a higher melting point than the metal or metal alloy, characterized in that
- the first pipe (1), having the widened portion (3), is made from the metal or metal alloy having the higher melting point,
- the cylindrical inner generated surface of the widened portion (3) merges via an inner cone (4) into the unwidened zone of the inner wall of the first pipe (1),
- the end of the second pipe (2) has a conical annular surface (9) correspondingly bearing against the inner cone (4), and
- the boundary layer (10) of the end of the second pipe (2) forming said annular surface (9) and adjacent the inner cone (4) and the filling (11) of the brazing gap (12) is material of the second pipe (2) melted in situ and resolidified.

2. A gastight connection according to claim 1, characterized in that the first pipe (1) having the widened portion (3) is a copper pipe and the second pipe (2) is an aluminium pipe.

3. A gastight connection according to one of claims 1 and 2, characterized in that inserted in the end zone of the second pipe (2) is a metal sleeve (34) which is adapted to the internal diameter of the second pipe (2) and which has contact with said second pipe (2) and which extends beyond the end face (8) of the second pipe (2) into the first pipe (1) and is also made from a material having a higher melting point than the metal or the metal alloy from which the second pipe (2) is made.

4. A gastight connection according to claim 3, characterized in that the sleeve (34) has a smaller wall thickness than the pipes (1 and 2) to be connected and is made from steel.

5. A gastight connection according to one of claims 3 and 4, characterized in that an enlargement (38) is provided between the inner cone (4) and the start of the unwidened zone of the first pipe (1), a short transition cone (39) to the unwidened zone of the first pipe (1) being provided at the end of said enlargement, the external diameter of the sleeve (34) is larger than the internal diameter of the unwidened zone of the first pipe (1) and smaller than the internal diameter of the enlargement (38), and a portion of the length of the sleeve (34) lies in the enlargement (38).

6. A gastight connection according to one of claims 3 to 5, characterized in that the second pipe (2) has a wall indentation (37) which is the inner stop for fixing the position of the sleeve (34) along the axis of the pipe.

7. A gastight connection according to one of claims 1 to 6, characterized in that the second pipe (2) is the suction pipe of an evaporator (24) of a compressor refrigerator and the first pipe (1) is the connecting tube to the suction side of the compressor.

8. A method of producing a gastight connection between pipes made from metal materials having different melting points, more particularly a copper pipe and an aluminium pipe, wherein the end of the first of the pipes is widened and the end of the second pipe is inserted into the widened portion receiving said second pipe with a clearance the size of a brazing gap, whereafter the inserted connection is heated and the brazing gap is filled with lower-melting material in comparison with the metal material having a higher melting point, characterized in that
- the higher-melting pipe is widened and an internally conical transition is created between the cylindrical widened portion and the adjoining zone of the pipe,
- if necessary the end zone of the lower-melting pipe is wetted on the outside and the widened portion on the inside with a flux,
- the end zone of the lower-melting pipe is inserted into the widened portion of the higher-melting pipe until it abuts the conical transition, and
- the widened portion and the conical transition are heated until the lower-melting pipe partially melts in the widened portion, whereafter the pipes are advanced in the direction of the pipe axis relatively towards one another and in the direction of one another up to a given advance, and the supply of heat is discontinued.

9. A method according to claim 8, characterized in that a metal sleeve is inserted by a portion of its length into the end zone of the lower-melting pipe before said end zone of the lower-melting pipe is inserted into the widened portion of the higher-melting pipe.

10. An apparatus for the performance of the method according to claim 8, having a clamping device for the vertical clamping of a pipe and a heat source which is directed towards the end zone, situated above the clamping device, of a clamped pipe, characterized by
- a guide device (17), positioned above the clamping device (13), for a further pipe (1) in alignment with the clamped pipe (2), the guide device (17) being retained vertically displaceably between adjustable positions and in a top operational position of the clamped pipe (2) via the further pipe (1) fitted on to the clamped pipe (2) and being at the same time under a clearly defined applied load,
- and a transmitter (20) which signals that the top operating position has been abandoned in the direction of a bottom operating position defined by a stop and which is connected via a control line (21) to the control device of the apparatus.

## Revendications

1. Joint étanche aux gaz entre des tuyaux de petit diamètre en métaux ou alliages métalliques à points de fusion différents, dans lequel la zone d'extrémité du premier tube est évasée et le bout uni du second tube est emboîté dans cette partie évasée et dans lequel un intervalle de brasage existant initialement entre la partie évasée et le second tube emboîté est rempli d'une matière ayant un point de fusion plus bas que le métal ou l'alliage métallique à point de fusion le plus élevé, caractérisé :
- en ce que le premier tube (1) comportant la partie évasée (3) est constitué du métal ou de l'alliage métallique à point de fusion le plus élevé ;
- en ce que la surface cylindrique intérieure de la partie évasée (3) est raccordée par un cône intérieur (4) à la zone évasée de la paroi intérieure du premier tube (1) ;
- en ce que le bout uni du second tube (2) comporte une surface annulaire (9), ayant une conicité correspondante, qui est en appui sur le cône intérieur (4) ; et
- en ce que la couche limite (10) du bout uni du second tube (2), qui constitue cette surface annulaire (9) et fait face au cône intérieur (4), et le remplissage (11) de l'intervalle de brasage (12) constituent une matière du second tube (2) qui a fondu in situ et a redurci.

2. Joint étanche aux gaz selon la revendication 1, caractérisé en ce que le premier tube (1) comportant la partie évasée (3) est un tube en cuivre et le second tube (2) est un tube en aluminium.

3. Joint étanche aux gaz selon l'une des revendications 1 et 2, caractérisé en ce qu'un fourreau métallique (34) adapté au diamètre intérieur du second tube (2) est emboîté dans la zone d'extrémité du second tube (2), est en contact avec ce second tube (2), s'étend dans le premier tube (1) au-delà de la surface frontale (8) du second tube (2) et est par ailleurs constitué d'une matière qui a un point de fusion plus élevé que le métal ou l'alliage métallique dont le second tube (2) est constitué.

4. Joint étanche aux gaz selon la revendication 3, caractérisé en ce que le fourreau (34) a une épaisseur de paroi plus faible que les tubes (1 et 2) à joindre et est en acier.

5. Joint étanche aux gaz selon l'une des revendications 3 et 4, caractérisé en ce qu'une partie élargie (38) est située entre le cône intérieur (4) et le début de la zone non évasée du premier tube (1) et un cône court (39) de transition avec la zone non évasée du premier tube (1) est situé à l'extrémité de la partie élargie, en ce que le diamètre extérieur du fourreau (34) est supérieur au diamètre intérieur de la zone non évasée du premier tube (1) et inférieur au diamètre intérieur de la partie élargie (38), et en ce qu'un tronçon longitudinal du fourreau (34) est situé dans la partie élargie (38).

6. Joint étanche aux gaz selon l'une des revendications 3 à 5, caractérisé en ce que le second tube (2) comporte une partie repoussée de paroi (37) qui constitue une butée intérieure servant à fixer la position du fourreau (34) suivant l'axe des tubes.

7. Joint étanche aux gaz selon l'une des revendications 1 à 6, caractérisé en ce que le second tube (2) est constitué par le tube d'aspiration d'un évaporateur (24) d'un réfrigérateur à compresseur et le premier tube (1) est constitué par le tube de liaison avec le côté d'aspiration du compresseur.

8. Procédé de réalisation d'un joint étanche aux gaz entre des tubes en matières métalliques à points de fusion différents, notamment un tube de cuivre et un tube d'aluminium, selon lequel on évase le premier des tubes à son extrémité et on emboîte le bout uni du second tube dans la partie évasée qui reçoit ce bout uni avec un jeu de la dimension d'un intervalle de brasage, puis on chauffe le joint à emboîtement, l'intervalle de brasage se remplissant alors de la matière à point de fusion plus faible que la matière métallique à point de fusion le plus élevé, caractérisé :
- en ce qu'on évase le tube à point de fusion le plus élevé et on réalise une transition conique intérieure entre la partie cylindrique et la zone du tube qui lui est adjacente ;
- en ce qu'on soumet éventuellement la zone d'extrémité du tube à point de fusion le plus bas, sur sa face extérieure, et la partie évasée, sur sa face intérieure, à un mouillage au moyen d'un fondant ;
- en ce qu'on emboîte la zone d'extrémité du tube à point de fusion le plus bas dans la partie évasée du tube à point de fusion le plus élevé, jusqu'à ce qu'elle vienne en butée sur la transiton conique ; et
- en ce qu'on chauffe la partie évasée et la transition conique, jusqu'à ce que le tube à point de fusion le plus bas fonde partiellement dans la partie évasée, à la suite de quoi on fait avancer les tubes l'un vis-à-vis de l'autre et l'un sur l'autre, suivant une avance prédéterminée et d'une manière convenable suivant la direction de l'axe des tubes, et on règle l'apport de chaleur.

9. Procédé selon la revendication 8, caractérisé en ce qu'on introduit un fourreau métallique, par une partie de la longueur de ce fourreau, dans la zone d'extrémité du tube à point de fusion le plus bas, avant d'emboîter la zone d'extrémité du tube à point de fusion le plus bas dans la partie évasée du tube à point de fusion le plus élevé.

10. Installation de mise en oeuvre du procédé selon la revendication 8, comprenant un dispositif de serrage, permettant de serrer un tube en position verticale, et une source de chaleur orientée sur la zone d'extrémité d'un tube serré qui est située au-dessus du dispositif de serrage, caractérisé :
- par un dispositif (17) de guidage d'un second tube (1) placé dans l'alignement du tube (2) serré, ce dispositif de guidage étant disposé au-dessus du dispositif de serrage (13), étant mobile verticalement entre des positions réglables et étant maintenu dans une position supérieure de travail par le tube (2) serré, au-dessus du second tube (1) prenant appui sur le tube (2) serré, de sorte que ce dispositif de guidage (17) est soumis à une charge déterminée ; et
- par un détecteur (20) qui signale le moment où la position supérieure de travail est quittée en direction d'une position inférieure de travail déterminée par une butée, et qui est relié au dispositif de commande de l'installation par une ligne de commande (21).
